# EUROPEAN PATENT APPLICATION

(11) **EP 4 822 866 A1**
(43) Date of publication of application: **14.10.2026**
(21) Application number: 25797831.2
(22) Date of filing: 21.04.2025
(51) Int. Cl.: H01M 50/383, H01M 50/367, H01M 50/249

(54) **BATTERY PACK AND VEHICLE INCLUDING SAME**

(30) Priority: 29.04.2024 KR 20240057159
(71) Applicant: LG Energy Solution, Ltd., Seoul 07335 (KR)
(72) Inventor: KANG, Jong-Mo, Daejeon 34122 (KR); KANG, Dal-Mo, Daejeon 34122 (KR); MUN, Jeong-O, Daejeon 34122 (KR); SEO, Sung-Won, Daejeon 34122 (KR)
(74) Representative: Plasseraud IP
(86) International application number: PCT/KR2025/005390
(87) International publication number: WO 2025/230206

(57) **Abstract**

The present disclosure relates to a battery pack including: a plurality of battery cells; a pack case having a storage space formed to store the plurality of battery cells, and a venting space formed to be in communication with the storage space and configured such that a fluid flows therein; and a direction-changing member configured to prevent the fluid from moving along a stacking direction of the battery cells in the venting space.

## Description

### TECHNICAL FIELD

The present disclosure relates to a battery pack, and a vehicle including the same.

This application is based on and claims priority from Korean Patent Application No. 10-2024-0057159, filed on April 29, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

Meanwhile, since a battery cell involves a chemical reaction during charging and discharging, its performance may deteriorate when used in environments exceeding the appropriate temperature. Moreover, if thermal control is not properly maintained at the appropriate temperature, there remains a potential risk of unexpected ignition or explosion. Therefore, if a thermal event such as thermal runaway occurs inside the battery pack, the high-temperature gas and flame discharged from the battery cells included therein may propagate to adjacent battery modules, leading to a chain reaction of battery module explosions, which poses a significant safety risk.

Therefore, there is a need to develop a structure capable of minimizing, when thermal runaway occurs in a battery module, the thermal energy received by adjacent battery modules, thereby preventing or suppressing the propagation of thermal runaway between battery cells and/or battery modules.

In addition, it is necessary to develop a structure capable of quickly discharging, when thermal runaway occurs in a battery module, high-temperature gas or flames generated from the battery module to the outside of the battery pack, thereby relieving heat accumulation inside the battery pack.

### DISCLOSURE

### Technical Problem

The present disclosure is designed to solve the problems of the related art, and therefore the present disclosure is directed to providing a battery pack capable of preventing or suppressing thermal runaway propagation between the battery modules by minimizing the thermal energy received by adjacent battery cells and/or battery modules when thermal runaway occurs in the battery module.

In addition, the present disclosure is also to provide a vehicle that includes such a battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; a pack case having a storage space formed to store the plurality of battery cells, and a venting space formed to be in communication with the storage space and configured such that a fluid flows therein; and a direction-changing member configured to prevent the fluid from moving along a stacking direction of the battery cells in the venting space.

The venting space may be formed between an inner plate and an outer plate of the pack case, and one or more inlet holes configured to connect the storage space and the venting space to each other may be formed on the inner plate of the pack case.

The battery pack may further include a module case provided in the storage space, configured to group the plurality of battery cells, and having a venting hole formed on one side thereof.

The direction-changing member may be provided on an inner surface of the outer plate of the pack case.

The direction-changing member may include a main body, and a plurality of protrusions configured to protrude inward from the main body.

The plurality of protrusions may be configured to be spaced apart from each other along a horizontal direction.

The protrusion may be configured to extend along a longitudinal direction of the battery cell.

The main body and the protrusion may be formed by bending a single plate multiple times.

The protrusion may have a curved outer surface.

At least some of the plurality of protrusions may be provided at positions corresponding to the inlet hole.

The protrusions may include a plurality of first protrusions provided at positions corresponding to the inlet holes, and second protrusions provided between adjacent first protrusions.

At least some of the plurality of protrusions may have an inner bent portion provided at an end thereof so as to bend a movement direction of the fluid.

The direction-changing member may be provided in an integrated form with the outer plate of the pack case.

In another aspect of the present disclosure, there is provided a vehicle including a battery pack according to the present disclosure.

### Advantageous Effects

According to one aspect of the present disclosure, in the case where a fluid such as a venting gas or flame moves along the stacking direction of the battery cells when thermal runaway occurs in a battery module, it is possible to minimize the fluid such as a venting gas or the like from moving toward adjacent battery cells and/or battery modules by inducing generation of a vortex or direction change. As a result, thermal runaway propagation between the battery cells and/or battery modules can be prevented or suppressed, thereby ensuring the safety and reliability of the battery pack.

In addition, according to another aspect of the present disclosure, when a thermal event occurs inside a specific battery module, it is possible to quickly cool the heat by increasing the movement path of the fluid such as a venting gas or flame.

In addition, according to another aspect of the present disclosure, it is possible to minimize flames, sparks, electrode discharges, or carbides, which have a strong tendency to move straight, from heading to adjacent battery cells and/or battery modules by changing the movement direction thereof.

In particular, the present disclosure may block substances such as sparks or electrode discharges, which may be ignition factors, from coming into contact with oxygen outside the battery module, thereby preventing fire from occurring outside the battery module.

In addition, according to another aspect of the present disclosure, it is possible to prevent or delay events due to thermal runaway of a device equipped with a battery pack, such as fire or explosion.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery pack according to an embodiment of the present disclosure.
FIG. 2 is an exploded perspective view of a battery pack according to an embodiment of the present disclosure.
FIG. 3 is a cross-sectional view of a portion of a battery pack to which a direction-changing member is applied according to an embodiment of the present disclosure, which may be a cross-sectional view taken along, for example, line I - I' in FIG. 1.
FIG. 4 is an overall perspective view of a battery module included in a battery pack according to an embodiment of the present disclosure.
FIG. 5 is an exploded perspective view of a battery module included in a battery pack according to an embodiment of the present disclosure.
FIG. 6 is a perspective view illustrating a battery pack in which a direction-changing member is provided in a pack case according to an embodiment of the present disclosure.
FIG. 7 is an enlarged perspective view of a direction-changing member included in a battery pack according to an embodiment of the present disclosure.
FIG. 8 is a cross-sectional view of a portion of a battery pack to which a direction-changing member is applied according to another embodiment of the present disclosure.
FIG. 9 is an enlarged perspective view of a direction-changing member applied to a battery pack according to another embodiment of the present disclosure.
FIG. 10 is a cross-sectional view illustrating an embodiment in which a direction-changing member included in a battery pack is integrated with a pack case according to another embodiment of the present disclosure.
FIG. 11 is a cross-sectional view of a portion of a battery pack to which a direction-changing member is applied according to another embodiment of the present disclosure.
FIG. 12 is a perspective view of a direction-changing member applied to a battery pack according to another embodiment of the present disclosure.
FIG. 13 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

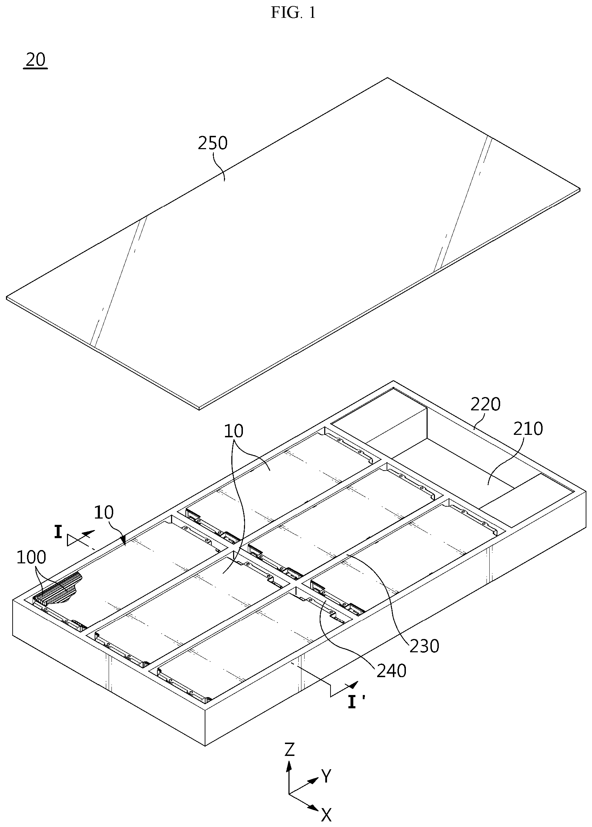

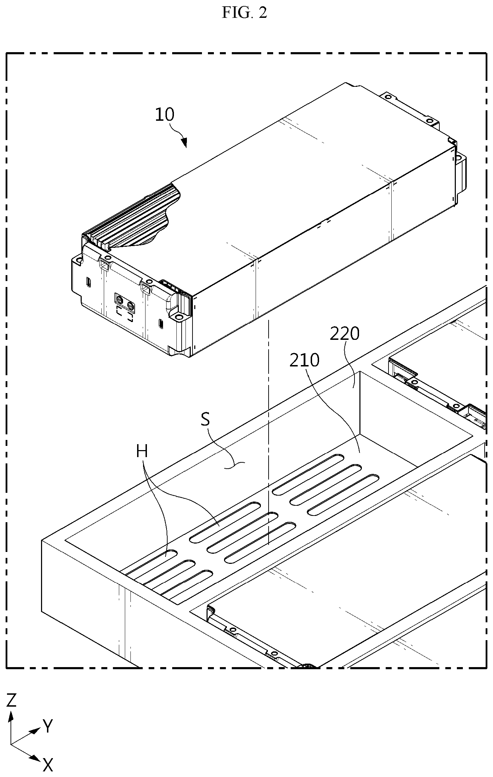

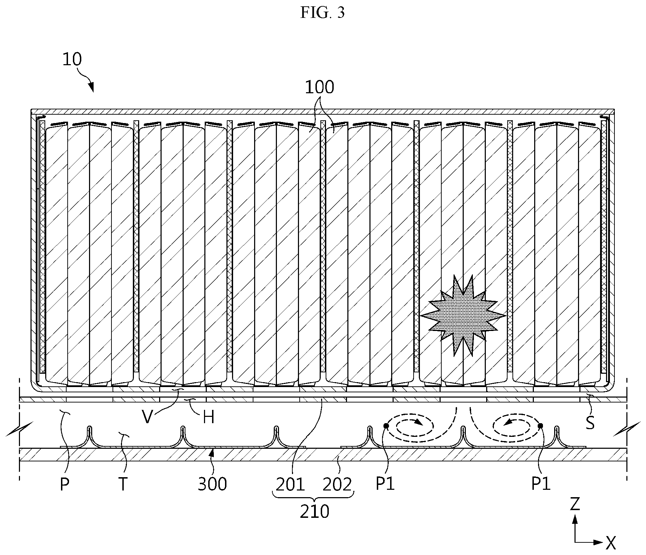

FIG. 1 is an overall perspective view of a battery pack according to an embodiment of the present disclosure, and FIG. 2 is an exploded perspective view of a battery pack according to an embodiment of the present disclosure. In addition, FIG. 3 is a cross-sectional view of a portion of a battery pack to which a direction-changing member is applied according to an embodiment of the present disclosure, which may be a cross-sectional view taken along, for example, line I - I' in FIG. 1.

Referring to FIGS. 1 to 3, a battery pack 20 according to an embodiment of the present disclosure may include a battery cell 100, a pack case 200, and a direction-changing member 300.

Referring to FIG. 1, a plurality of battery cells 100 may be included. In addition, the plurality of battery cells 100 may include an electrode assembly, a cell case that stores the electrode assembly, and an electrode lead that is connected to the electrode assembly and extends outward from the cell case to function as an electrode terminal. In this case, the plurality of battery cells 100 may be electrically connected to each other.

The battery cell 100 may be a pouch-type secondary battery. The cell case of such a pouch-type secondary battery may be configured as a pouch in which a metal layer made of aluminum is interposed between polymer layers.

The present disclosure is not limited to a specific type or shape of the battery cell 100, and various battery cells 100 known at the time of filing the present disclosure may be applied to configure the battery pack 20 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The plurality of battery cells 100 may be disposed side by side in the front-back direction (X-axis direction) while standing in the vertical direction (Z-axis direction).

The pack case 200 may be configured to store a plurality of battery cells 100. The pack case 200 may have a plurality of storage spaces S configured to store the plurality of battery cells by dividing them. The storage space S is an empty space and may be configured in a shape capable of storing a predetermined number of battery cells 100 therein. Specifically, the storage space S may be partitioned by the cross-beam 230 described below and configured in a shape capable of storing the battery cells 100 therein.

The pack case 200 may be made of a material capable of securing mechanical strength, such as metal, for example, steel or SUS, or plastic, or may include such a material in order to safely protect the battery cells 100 stored therein.

In addition, the pack case 200 may include a venting space P. The venting space P may indicate a passage through which a fluid such as a venting gas or flame flows. Here, the fluid may include sparks, electrode discharges, carbides, or the like, as well as venting gases or flames.

This venting space P may be configured to be in communication with the storage space S. Accordingly, the fluid in the storage space S may flow into the venting space P and move inside the venting space P.

The venting space P may be formed inside the pack case 200. Here, the inside of the pack case 200 may indicate a predetermined space configured separately inside the pack case 200, or may indicate a hollow space formed by a plurality of beams or plates constituting the pack case 200, as illustrated in FIG. 3.

The direction-changing member 300 may be provided in the venting space P. The direction-changing member 300 may be configured to change the flow direction of the fluid at least once. The direction-changing member 300 may be configured in a form that changes the flow direction of the fluid to the opposite direction when the fluid flows through the venting space P. In particular, the direction-changing member 300 may be configured to interrupt movement along the stacking direction (X-axis direction) of the battery cell 100.

In addition, the direction-changing member 300 may be configured to create a vortex in a fluid such as a venting gas or flame. Therefore, the flow direction of the fluid such as a venting gas or the like may be changed by the direction-changing member 300, so that the fluid may rotate.

For example, the fluid such as a venting gas or the like may flow, as indicated by the dotted arrows in FIG. 3, inside the venting space P. In particular, in the part indicated by P1, the flow direction of the fluid such as a venting gas or the like may change into the opposite direction. In the part indicated by P1, the flow direction of the fluid such as a venting gas or the like changes by approximately 180 degrees from the -X-axis direction to the +X-axis direction.

At least one direction-changing member 300 may be provided. One direction-changing member 300 may be configured to have a size corresponding to the venting space P. Alternatively, as disclosed in the embodiment illustrated in FIG. 3, a plurality of direction-changing members 300 may be provided for each set of battery cells 100. The plurality of direction-changing members 300 may be arranged to be spaced apart from each other along the stacking direction of the battery cells 100.

In addition, the direction-changing member 300 may be made of a material having fire resistance and/or heat resistance. For example, the direction-changing member 300 may have a metal material such as SUS. Therefore, the direction-changing member 300 may not be deformed or damaged even by the heat of the fluid such as a high-temperature venting gas or flame.

According to the above-implemented configuration of the present disclosure, when the fluid such as a venting gas or flame moves along the stacking direction of the battery cells 100, the direction-changing member 300 may induce generation of a vortex or direction change. Accordingly, the heat may be quickly cooled by increasing the movement path of the fluid such as a venting gas or flame. In addition, by changing the movement direction of the flames, sparks, electrode discharges, or carbides, which have a strong tendency to travel straight, their movement toward adjacent battery cells and/or battery modules may be minimized.

Therefore, according to the above-implemented configuration of the present disclosure, it is possible to minimize the fluid such as a venting gas or the like from moving toward the adjacent battery cell 100. As a result, the thermal runaway propagation between the battery cells 100 may be prevented or suppressed, thereby ensuring the safety and reliability of the battery pack 20.

In addition, according to the above-implemented configuration of the present disclosure, it is possible to prevent fire from occurring outside the battery module by blocking substances such as sparks or electrode discharges, which may be ignition factors, from coming into contact with oxygen outside the battery module.

Referring to FIG. 2, the pack case 200 may include a base frame 210 and a plurality of side frames 220.

The base frame 210 may be configured so that a plurality of battery cells 100 are seated thereon. The base frame 210 may form the bottom surface of the pack case 200 and may be configured in the form of a square plate. In addition, the base frame 210 may have a flat upper surface so that the module case 120 may be stably seated thereon. That is, the storage space S may be formed above the base frame 210.

The plurality of side frames 220 may extend upward from respective edges of the base frame 210. The plurality of side frames 220 may be configured to surround the plurality of battery cells 100. More specifically, the plurality of side frames 220 may have a front wall located at an end of the base frame 210 to the -Y-axis direction, a left wall located at an end to the +X-axis direction, a rear wall located at an end to the +Y-axis direction, and a right wall located at an end to the -X-axis direction, respectively, to form the side surfaces of the pack case 200.

In addition, referring to FIG. 2, the pack case 200 may include a center beam 240. The center beam 240 may be configured to connect the side frames 220 facing each other, among the plurality of side frames 220. For example, as illustrated in FIG. 2, at least one of the center beams 240 may be configured to extend in the left-right direction to connect the right wall and the left wall, among the side frames 220.

In addition, the pack case 200 may include a cross-beam 230. The cross-beam 230 may be configured to partition the storage space S into a plurality of spaces. A plurality of cross-beams 230 may be provided. The cross-beam 230 may be configured to connect the side frames 220 facing each other, among the plurality of side frames 220. For example, as shown in FIG. 1, the storage space S may be partitioned into three rows and two columns by the cross-beams 230.

In this case, the cross-beam 230 may be configured to protrude further upward than the battery cell 100. According to the above-implemented configuration of the present disclosure, since the cross-beam 230 is configured to extend further upward than the battery cell 100, the adjacent storage spaces S may be reliably separated by the cross-beam 230 to prevent thermal propagation.

The pack case 200 may further include a pack lid 250 coupled to the top of the side frames 220. The pack lid 250 may be configured to form the upper surface of the pack case 200. The pack lid 250 may be configured to cover the top of the battery cell 100.

Referring to the embodiment illustrated in FIG. 3, the venting space P may be formed in the base frame 210. That is, the venting space P may be formed below the battery cells 100. Accordingly, the storage space S and the venting space P may be disposed in the vertical direction.

More specifically, the base frame 210 of the pack case 200 may have an inner plate 201 and an outer plate 202. The venting space P may be formed between the inner plate 201 and the outer plate 202. The venting space P may be configured to extend in the horizontal direction. The storage space S and the venting space P may be disposed parallel to each other in the vertical direction, based on the inner plate 201 of the base frame 210.

Referring to FIGS. 2 and 3, the pack case 200 may include an inlet hole H. The inlet hole H may be provided between the storage space S and the venting space P. The inlet hole H may be configured to communicate the storage space S with the venting space P. As a result, the fluid such as a venting gas or the like discharged from the battery cell 100 may flow from the storage space S into the venting space P. At least one inlet hole H may be provided.

The inlet hole H may be provided in the base frame 210. The inlet hole H may be formed on the inner plate of the base frame 210. Accordingly, the storage space S may be in communication with the venting space P formed in the base frame 210 through the inlet hole H.

According to the above-implemented configuration, the fluid such as a venting gas or flame generated in the battery cell 100 provided in the storage space S may flow into the venting space P in the vertical direction through the inlet hole H. The fluid may be prevented from moving in the horizontal direction, particularly, along the stacking direction of the battery cell 100, by the direction-changing member 300 provided inside the venting space P.

Accordingly, according to the above-implemented configuration of the present disclosure, the direction-changing member 300 may change the flow direction of the fluid introduced downward from the above or induce generation of a vortex, thereby cooling the heat of the venting gas, and sparks or particles may be captured at the bottom by gravity. Therefore, thermal propagation inside the battery pack 20 may be suppressed.

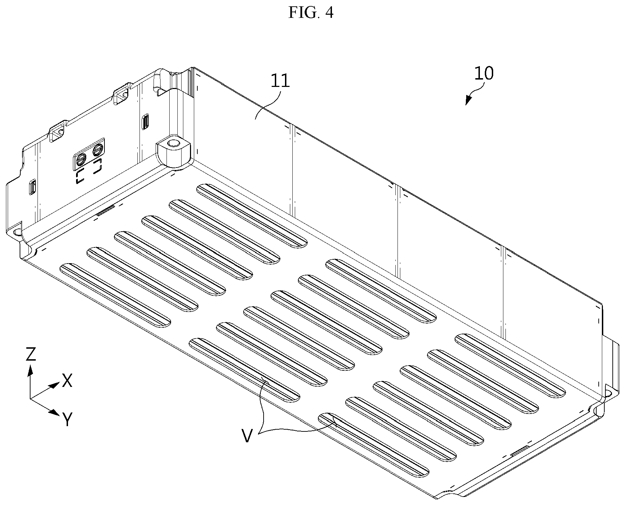

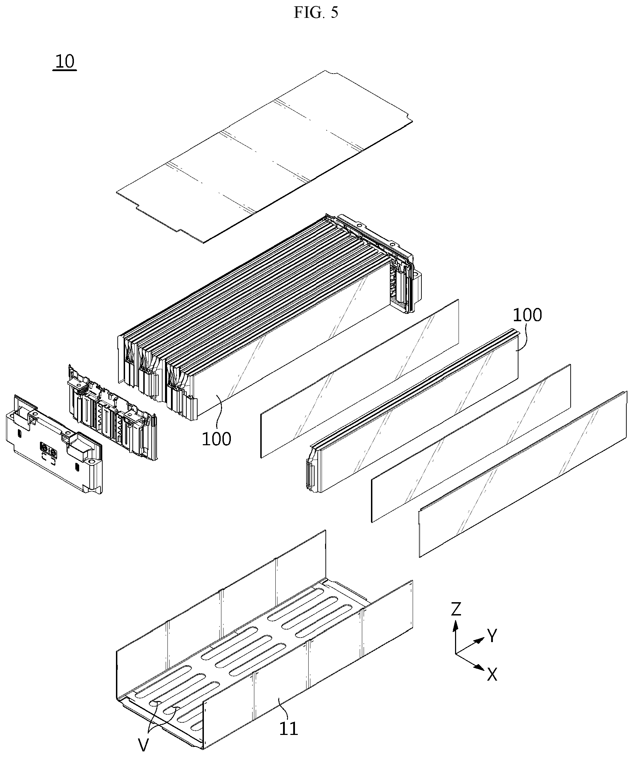

FIG. 4 is an overall perspective view of a battery module included in a battery pack according to an embodiment of the present disclosure, and FIG. 5 is an exploded perspective view of a battery module included in a battery pack according to an embodiment of the present disclosure.

Referring to FIG. 4 and FIG. 5, a plurality of battery cells 100 may be modularized into one or more battery modules 10. That is, the battery pack 20 according to the present disclosure may include a plurality of battery modules 10, and a plurality of battery cells 100 included in the battery pack 20 may be divided and included in the plurality of battery modules 10. In this case, the plurality of battery cells 100 included in the battery module 10 may be electrically connected to each other.

A plurality of battery modules 10 may be respectively provided in each storage space S of the pack case 200. In particular, the battery pack 20 according to the present disclosure may include a module case 11. The module case 11 may have an empty space formed therein, and may be configured to store at least some of the plurality of battery cells 100 in the inner space. In particular, the module case 11 may be configured to store the battery cells 100 provided in each storage space S. That is, the module case 11 may be included in each storage space S to group a plurality of battery cells 100 into a plurality of battery modules 10, and may be a boundary that physically confines the inner space of each battery module 10.

In addition, although not shown in the drawing, the battery module 10 may include a bus-bar assembly and/or a module terminal electrically connected to a plurality of battery cells 100 stored therein.

The battery module 10 may include a venting hole V. The venting hole V may be configured such that the gas generated from the battery cell 100 stored inside the module case 11 is discharged to the outside of the module case 11.

Specifically, the venting hole V may be provided in the module case 11 to enable directional venting to a specific direction. In particular, the venting hole V may be provided on one side of the module case 11 facing the inlet hole H. The venting hole V may be configured to be in communication with the inlet hole H of the pack case 200.

For example, as illustrated in FIG. 2, the inlet hole H may be provided on the base frame 210, and as illustrated in FIGS. 4 and 5, the venting hole V may be provided on the lower side of the module case 11 facing the base frame 210. The venting hole V may be configured to correspond to the size, position, or shape of the inlet hole H. Accordingly, the fluid such as a venting gas or the like may be guided to move directly toward the inlet hole H.

According to the above-implemented configuration of the present disclosure, the fluid such as a venting gas or the like discharged from the venting hole V facing the inlet hole H may move directly to the venting space P formed in the pack case 200, so the fluid such as a venting gas or the like may be discharged more quickly to the outside of the storage space S.

Referring to FIG. 3, the direction-changing member 300 may be provided on the inner surface of the outer plate 202 of the pack case 200. The direction-changing member 300 may be configured to be seated on the inner surface of the outer plate 202 of the base frame 210 inside the venting space P. The direction-changing member 300 may be fixed to the outer plate 202 of the base frame 210 by welding or adhesive.

In this case, the direction-changing member 300 may be configured to be smaller than the height of the venting space P. Accordingly, the direction-changing member 300 may be configured to prevent the venting gas from moving in the stacking direction of the battery cell 100 only in the lower portion of the venting space P.

According to the above-implemented configuration of the present disclosure, the high-temperature venting gas discharged when thermal runaway occurs in the battery cell 100 may be suppressed from moving in the stacking direction of the battery cell 100 by the direction-changing member 300 provided on the lower portion of the venting space P, and sufficient time may be obtained to cool down the heat of the venting gas.

In addition, when the thermal runaway of the battery cell 100 ends, the venting gas may move horizontally above the direction-changing member 300. As a result, the heat may quickly spread throughout the entire venting space P, thereby reducing the temperature inside the venting space P in a short period of time. Therefore, according to the above-implemented configuration of the present disclosure, the influence of heat on the adjacent battery cell 100 or battery module 10 may be minimized, thereby preventing or suppressing the thermal runaway propagation of the battery pack 20.

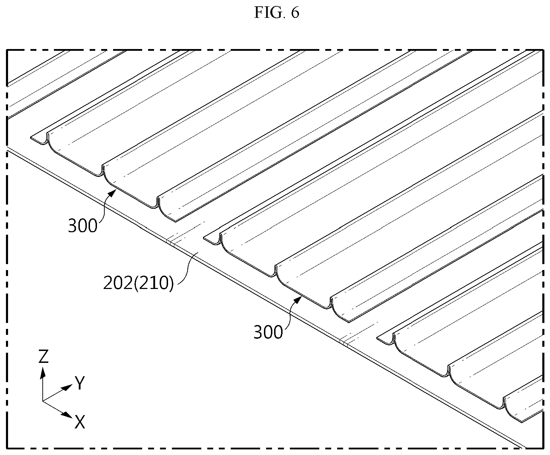

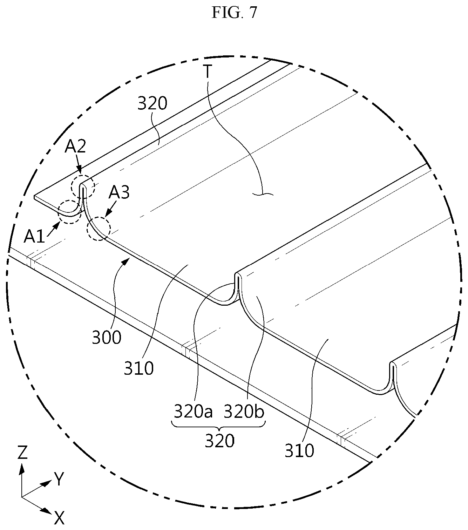

The detailed structure of the direction-changing member 300 will be described with further reference to FIGS. 6 and 7.

FIG. 6 is a perspective view illustrating a battery pack in which a direction-changing member is provided in a pack case according to an embodiment of the present disclosure, and FIG. 7 is an enlarged perspective view of a direction-changing member included in a battery pack according to an embodiment of the present disclosure.

Referring to FIGS. 6 and 7, the direction-changing member 300 may include a main body 310 and a protrusion 320. The main body 310 may be provided to be seated on the outer plate 202 of the base frame 210. The main body 310 may have an outer surface configured in the form of a flat plate. For example, the main body 310 may be configured in the form of a plate that extends in one direction. In addition, a plurality of main bodies 310 may be provided along one direction.

The protrusion 320 may be configured to protrude inward from the main body 310. The protrusion 320 may be provided between adjacent main bodies 310. A plurality of protrusions 320 may be provided. The protrusion 320 may be configured to limit the flow path of the fluid such as a venting gas or the like in the venting space P. That is, the protrusion 320 may be a structure provided to prevent the fluid from moving in the stacking direction of the battery cell 100 in the venting space P. For example, the flow direction of the fluid may be formed by the protrusion 320, as indicated by the dotted arrows in FIG. 3, in the venting space P.

According to this implemented configuration of the present disclosure, the configuration of preventing the flow of the fluid such as a venting gas or the like may be implemented more reliably by the protrusion 320.

The plurality of main bodies 310 may be disposed on the same plane. For example, the plurality of main bodies 310 may be disposed on the inner surface of the outer plate 202 of the base frame 210. In addition, the plurality of protrusions 320 may be disposed on the same plane.

The plurality of protrusions 320 may be provided to be spaced apart from each other along the horizontal direction. For example, as disclosed in the embodiments illustrated in FIGS. 6 and 7, the plurality of protrusions 320 may be configured to be spaced apart from each other along the stacking direction of the battery cell 100.

Accordingly, a trap space T may be formed between adjacent protrusions 320 to generate a vortex of the fluid such as a venting gas or flame. The trap space T may be configured to trap the fluid. The venting gas may rotate multiple times in the trap space T. In addition, particles such as sparks or active materials may be captured in the trap space T.

According to the above-implemented configuration of the present disclosure, since a trap space T is formed between adjacent protrusions 320, when thermal runaway occurs in a battery cell 100, venting gas or flame may stay in the trap space T, thereby increasing the movement path or movement time of the fluid.

In addition, the protrusion 320 may be configured to extend along the longitudinal direction of the battery cell 100. The protrusion 320 may be configured in the form of a partition standing vertically. Accordingly, the venting space P may be partitioned along the stacking direction of the battery cells 100 by the protrusion 320.

According to the above-implemented configuration of the present disclosure, the fluid may be further suppressed from moving along the stacking direction of the battery cells 100 beyond the protrusion 320 in the venting space P. Accordingly, the movement of heat to other adjacent battery cells 100 or battery modules 10 may be minimized.

In addition, when the thermal runaway in the battery cell 100 ends, the venting gas may mainly travel in the longitudinal direction of the battery cell 100 along the interface between the protrusion 320 and the main body 310 in the trap space T.

In this case, although not shown in the drawing, the pack case 200 may include a venting device configured to discharge the venting gas to the outside of the pack case 200. The venting device may be provided in the base frame 210 having the venting space P. Alternatively, the venting device may be provided in the side frame 220. The venting device may be provided at the end of the protrusion 320 in the extension direction thereof. Accordingly, the venting gas inside the venting space P may be quickly discharged to the outside of the pack case 200 through the venting device, thereby preventing the internal pressure of the pack case 200 from increasing.

More specifically, the direction-changing member 300 may be configured by bending a single plate multiple times. That is, the main body 310 and the protrusion 320 may be formed by bending a single plate multiple times. For example, in the direction-changing member 300, the portion indicated by A1, the portion indicated by A2, and the portion indicated by A3 shown in FIG. 7 may be bent once, respectively, to form one protrusion 320. Therefore, the protrusion 320 and the main body 310 may be configured to be connected to each other.

According to the above-implemented configuration of the present disclosure, since the protrusion 320 and the main body 310 may be formed by bending a single plate, the process for manufacturing the direction-changing member 300 may be facilitated. Accordingly, the productivity may be improved when manufacturing the battery pack 20.

Since the protrusion 320 is formed by bending a single plate, a predetermined space may be formed between the protrusion 320 and the outer plate 202 of the base frame 210.

In addition, referring to FIG. 7, as shown in the portion indicated by A1 and the portion indicated by A3, both sides of the protrusion 320 may be formed by bending at approximately 90 degrees. Accordingly, the protrusion 320 may be configured to be substantially orthogonal to the main body 310. In particular, as shown in the portion indicated by A2, the central portion of the protrusion 320 may be formed by bending at approximately 180 degrees. That is, the central portion of the protrusion 320 may not have a horizontal part, but may only have a vertical part.

In addition, since the direction-changing member 300 is bent at the portion indicated by A2, the protrusion 320 may have a first surface 320a and a second surface 320b formed to face each other on opposite sides. The first surface 320a and the second surface 320b may be configured to be symmetrical to each other relative to the central portion of the protrusion 320. The angle formed between the first surface 320a and the second surface 320b may be less than about 30 degrees. That is, the central portion of the protrusion 320 may be configured substantially in a pointed triangular shape. Accordingly, an edge may be formed at the top of the protrusion 320 along the longitudinal direction of the battery cell 100.

In this case, as shown in the portion indicated by A1 and the portion indicated by A3, the plurality of main bodies 310, first surfaces 320a, and second surfaces 320b may be configured to be connected to each other.

The protrusion 320 may be configured to have a curved outer surface. That is, the first surface 320a and the second surface 320b may be configured to have a curved surface. The first surface 320a and the second surface 320b may be configured to be recessed in the direction toward the central portion (indicated by A2 in FIG. 7) of the protrusion 320. That is, the first surface 320a and the second surface 320b may be configured to be recessed in a direction away from the main body 310.

The above-implemented configuration of the present disclosure may be the most preferable form to create a vortex in the fluid such as a venting gas or the like introduced into the trap space T. According to the above-implemented configuration of the present disclosure, the movement direction of the fluid such as a venting gas or the like may be changed by the curved shape of the first surface 320a and the second surface 320b. In addition, the fluid such as a venting gas or the like may be minimized from passing over the protrusion 320 along the first surface 320a and the second surface 320b to other adjacent trap spaces T. Accordingly, according to the above-implemented configuration of the present disclosure, the venting gas or the like in the venting space P may be minimized from moving to adjacent battery cells 100 and/or battery modules 10.

Furthermore, according to the above-implemented configuration of the present disclosure, a flame or spark having a strong tendency to move straight may collide with the first surface 320a and the second surface 320b so that the movement direction thereof is changed, thereby being captured in the main body 310.

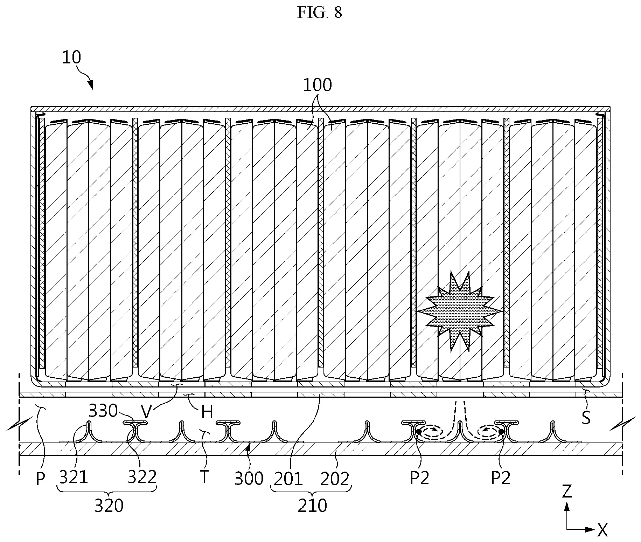

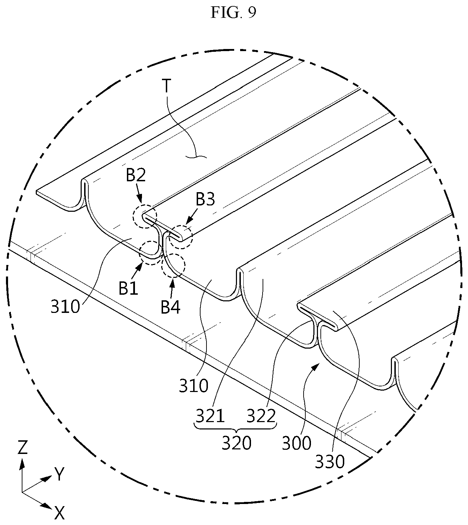

FIG. 8 is a cross-sectional view of a portion of a battery pack to which a direction-changing member is applied according to another embodiment of the present disclosure, and FIG. 9 is an enlarged perspective view of a direction-changing member applied to a battery pack according to another embodiment of the present disclosure.

Referring to both FIG. 3 and FIG. 8, at least some of the plurality of protrusions 320 may be provided at positions corresponding to the inlet holes H. That is, at least some of the plurality of protrusions 320 may be provided below the inlet holes H. In the embodiment illustrated in FIG. 3, one protrusion 320 may be provided for each inlet hole H. In particular, the central portion of the protrusion 320 may be configured to correspond to the central portion of the inlet hole H.

Accordingly, as indicated by the dotted arrows in FIG. 3, the venting gas flowing into the venting space P from the +Z-axis direction with respect to the protrusion 320 may be divided and moved to both left and right directions along both sides of the protrusion 320.

Meanwhile, there is a possibility that the fluid such as a venting gas or the like flowing in through an inlet hole H will move upward and head toward another inlet hole H through an adjacent protrusion 320, instead of changing its direction or creating a vortex in the trap space T, thereby flowing back into the storage space S.

Therefore, a battery pack 20 according to another embodiment of the present disclosure may be provided with protrusions 320 in different forms. More specifically, the protrusions 320 may include a first protrusion 321 and a second protrusion 322. In this case, the first protrusion 321 may be the protrusion 320 disclosed in the embodiment illustrated in FIG. 3, FIG. 6, and FIG. 7. A plurality of first protrusions 321 and second protrusions 322 may be provided. The first protrusions 321 and the second protrusions 322 may be disposed alternately. A trap space T may be formed between the first protrusion 321 and the second protrusion 322.

For example, as disclosed in the embodiment illustrated in FIG. 8, the first protrusion 321 may be provided at a position corresponding to the inlet hole H. The first protrusion 321 may be provided for each inlet hole H. In addition, the second protrusion 322 may be provided between adjacent first protrusions 321. The second protrusion 322 may be provided between the inlet holes H.

Referring to FIGS. 8 and 9, the protrusion 320 may have an inner bent portion 330. The inner bent portion 330 may be provided on at least some of the plurality of protrusions 320. For example, the inner bent portion 330 may be provided on the second protrusion 322.

Although FIGS. 8 and 9 show an embodiment in which the inner bent portion 330 is provided only on the second protrusion 322, the inner bent portion 330 may be provided only on the first protrusion 321, or may be provided on both the first protrusion 321 and the second protrusion 322.

The structure of the inner bent portion 330 will be described in more detail. Referring to FIG. 8, the inner bent portion 330 may be configured to bend the movement direction of the fluid. Furthermore, the inner bent portion 330 may be configured to prevent the fluid such as a venting gas or the like from moving upward inside the trap space T.

For example, the fluid such as a venting gas or the like may move as indicated by the dotted arrows in FIG. 8 inside the venting space P. In particular, in the portion indicated by P2, the flow direction of the fluid such as a venting gas or the like may switch to a direction away from the inner bent portion 330. In the portion indicated by P2, the flow direction of the fluid such as a venting gas or the like may switch about 180 degrees from the +Z-axis direction to the -Z-axis direction.

In addition, the inner bent portion 330 may be provided on the central portion of the second protrusion 322. The inner bent portion 330 may be provided at the end of the second protrusion 322. The inner bent portion 330 may be configured to protrude outward from the end of the second protrusion 322. The inner bent portion 330 may be formed on both left and right sides of the second protrusion 322. The inner bent portion 330 may be configured to be symmetrical to each other relative to the central portion of the second protrusion 322.

The inner bent portion 330 may be formed by bending the end of the second protrusion 322. That is, the first protrusion 321, the second protrusion 322, and the main body 310 may be formed by bending a single plate multiple times. The structure of the first protrusion 321 is the same as that described in FIG. 7. In addition, the second protrusion 322 may be formed by bending the portion indicated as B1, the portion indicated as B2, the portion indicated as B3, and the portion indicated as B4, respectively, once in FIG. 9.

More specifically, referring to FIG. 9 the lower portion of the second protrusion 322 may be formed by bending at about 90 degrees, such as the portions indicated as B1 and B4. As a result, the second protrusion 322 may be configured to be substantially orthogonal to the main body 310. In particular, the upper end of the second protrusion 322, such as the portions indicated as B2 and B3, may include an inner bent portion 330 formed by bending at about 180 degrees on both sides. That is, the upper end of the second protrusion 322 may be configured in a flat shape to have a horizontal part.

The above-implemented configuration of the present disclosure may be the most desirable form to create a vortex in the fluid such as a venting gas or the like introduced into the trap space T. According to the above-implemented configuration of the present disclosure, the movement direction of the fluid such as a venting gas or the like may be changed by the curved shapes of the first surface 320a and the second surface 320b. In addition, the fluid such as a venting gas or the like may be minimized from passing over the protrusion 320 along the first surface 320a and the second surface 320b to other adjacent trap spaces T. Accordingly, according to the above-implemented configuration of the present disclosure, the venting gas or the like in the venting space P may be minimized from moving to the adjacent battery cells 100 and/or battery modules 10.

Furthermore, according to the above-implemented configuration of the present disclosure, a flame or spark having a strong tendency to move straight may collide with the first surface 320a and the second surface 320b so that the movement direction thereof is changed, thereby being captured in the main body 310.

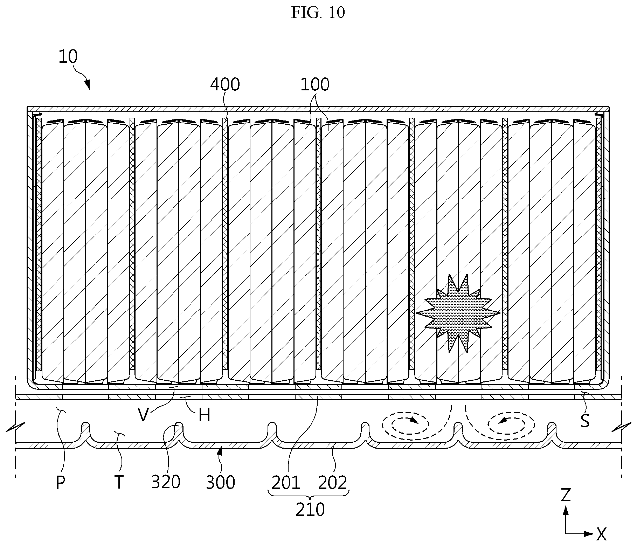

FIG. 10 is a cross-sectional view illustrating an embodiment in which a direction-changing member included in a battery pack is integrated with a pack case according to another embodiment of the present disclosure.

Referring to FIG. 10, the direction-changing member 300 may be configured to be integrated with the outer plate 202 of the pack case 200. That is, the main body 310 of the direction-changing member 300 may be integrated with the outer plate 202 of the base frame 210, and the protrusion 320 may be configured to protrude inward from the outer plate 202 of the base frame 210. In this case, the shape of the outer plate 202 of the base frame 210 may be configured to be identical to the shape of the direction-changing member 300 illustrated in FIG. 3 or FIG. 8. That is, the outer plate 202 of the base frame 210 may be bent multiple times to form a plurality of protrusions 320.

According to the above-implemented configuration of the present disclosure, since the outer plate 202 of the base frame 210 is bent multiple times to form the protrusions 320, a separate process of manufacturing the direction-changing member 300 or attaching it to the outer plate 202 of the base frame 210 may be omitted. Accordingly, the cost and time may be reduced when manufacturing the battery pack 20, thereby improving productivity.

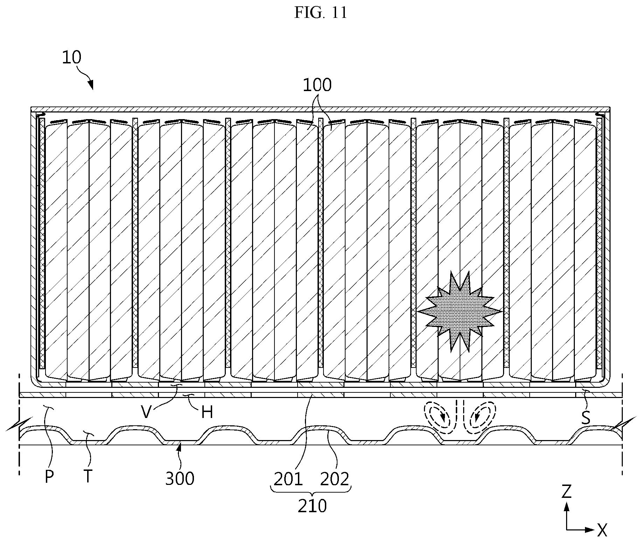

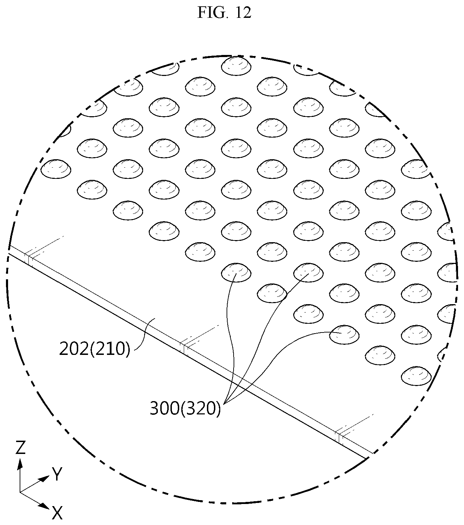

FIG. 11 is a cross-sectional view of a portion of a battery pack to which a direction-changing member is applied according to another embodiment of the present disclosure, and FIG. 12 is a perspective view of a direction-changing member applied to a battery pack according to another embodiment of the present disclosure.

In another embodiment, in the case where the base frame 210 and the direction-changing member 300 are manufactured to be integrated with each other, as disclosed in the embodiment illustrated in FIGS. 11 and 12, the protrusion 320 may be formed by pressurizing the outer plate 202 of the base frame 210 instead of bending. That is, the protrusion 320 may be formed by pressing the outer plate 202 of the base frame 210 inward from the outside. In this case, the protrusion 320 may be configured in the form of a protrusion. In addition, the protrusion 320 may be configured in the form of a circular dome.

According to the above-implemented configuration of the present disclosure, the protrusion 320 may be formed relatively simply by pressurizing the outer plate 202 of the base frame 210. Accordingly, the cost and time may be reduced when manufacturing the battery pack 20, thereby improving productivity.

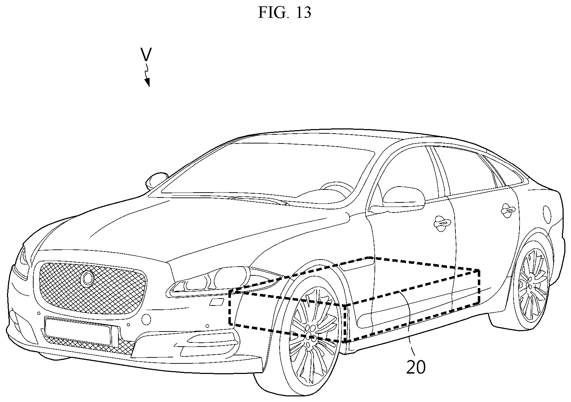

FIG. 13 is a schematic perspective view of a vehicle including a battery pack according to an embodiment of the present disclosure.

Referring to FIG. 13, a vehicle V according to an embodiment of the present disclosure may include one or more battery packs 20 according to an embodiment of the present disclosure. The vehicle V according to the present disclosure may be, for example, an electric vehicle, a hybrid vehicle, or a plug-in hybrid vehicle. The vehicle V includes a four-wheel vehicle and a two-wheel vehicle. The vehicle V may be operated by power supplied from the battery pack 20 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a plurality of battery cells;
a pack case having a storage space formed to store the plurality of battery cells, and a venting space formed to be in communication with the storage space and configured such that a fluid flows therein; and
a direction-changing member configured to prevent the fluid from moving along a stacking direction of the battery cells in the venting space.

2. The battery pack according to claim 1,
wherein the venting space is formed between an inner plate and an outer plate of the pack case, and
wherein one or more inlet holes configured to connect the storage space and the venting space to each other are formed on the inner plate of the pack case.

3. The battery pack according to claim 1,
further comprising a module case provided in the storage space, configured to group the plurality of battery cells, and having a venting hole formed on one side thereof.

4. The battery pack according to claim 1,
wherein the direction-changing member is provided on an inner surface of the outer plate of the pack case.

5. The battery pack according to claim 2,
wherein the direction-changing member comprises
a main body, and
a plurality of protrusions configured to protrude inward from the main body.

6. The battery pack according to claim 5,
wherein the plurality of protrusions are configured to be spaced apart from each other along a horizontal direction.

7. The battery pack according to claim 5,
wherein the protrusion is configured to extend along a longitudinal direction of the battery cell.

8. The battery pack according to claim 5,
wherein the main body and the protrusion are formed by bending a single plate multiple times.

9. The battery pack according to claim 5,
wherein the protrusion has a curved outer surface.

10. The battery pack according to claim 5,
wherein at least some of the plurality of protrusions are provided at positions corresponding to the inlet hole.

11. The battery pack according to claim 5,
wherein the protrusions comprise
a plurality of first protrusions provided at positions corresponding to the inlet holes, and
second protrusions provided between adjacent first protrusions.

12. The battery pack according to claim 5,
wherein at least some of the plurality of protrusions have
an inner bent portion provided at an end thereof so as to bend a movement direction of the fluid.

13. The battery pack according to claim 1,
wherein the direction-changing member is provided in an integrated form with the outer plate of the pack case.

14. A vehicle comprising a battery pack according to any one of claims 1 to 13.
